# EUROPÄISCHE PATENTANMELDUNG

(11) **EP 3 815 881 A1**
(43) Veröffentlichungstag der Anmeldung: **05.05.2021**
(21) Anmeldenummer: 19205628.1
(22) Anmeldetag: 28.10.2019
(51) Int. Cl.: B29C 65/02, B29C 65/34, B29C 65/60

(54) **VERBINDUNG VON KUNSTSTOFFEN MITTELS MIKRONIETEN**

(71) Anmelder: Dyconex AG, 8303 Bassersdorf (CH)
(72) Erfinder: Bihler, Eckardt, 8406 Winterthur (CH); Hauer, Marc, 8610 Uster (CH); Neubauer, Birgit, 72160 Horb (DE)
(74) Vertreter: Galander, Marcus

(57) **Zusammenfassung**

Die vorliegende Erfindung betrifft einen Verbundstoff umfassend eine erste polymere Materiallage und eine zweite polymere Materiallage, wobei die erste polymere Materiallage auf einer ersten Seite eine oder mehrere Aussparungen aufweist, die zweite polymere Materiallage auf einer ersten Seite eine oder mehrere Ausstülpungen aufweist, wobei die eine oder die mehreren Ausstülpungen einen ersten Bereich aufweist oder aufweisen, der sich von der Oberfläche der zweiten polymeren Materiallage erstreckt, und einen zweiten Bereich, der sich vom ersten Bereich erstreckt, und der zweite Bereich einen größeren Durchmesser als der ersten Bereich aufweist, und die mindestens eine oder mehreren Ausstülpungen formschlüssig in die eine oder mehreren Aussparungen eingreift oder eingreifen. Die Erfindung betrifft weiterhin ein entsprechendes Herstellungsverfahren.

## Beschreibung

Die vorliegende Erfindung betrifft einen mehrlagigen Verbundstoff, insbesondere ein Laminat, und ein Herstellungsverfahren dafür.

Verbundstoffe wie Kunststofflaminate werden häufig in Leiterplatten, Elektroden und Kathetern verwendet. Ein typisches Herstellungsverfahren für solche Laminate umfasst das Aufrauhen der Oberflächen der einzelnen Materiallagen und das Verkleben derselben. In Fällen, wo die Oberflächen von chemisch inerten Kunststoffen, wie z.B. Silikon, fluorierte Kunststoffe, LCP (Liquid Crystal Polymer), PEEK, etc., fest und dauerhaft verbunden werden sollen und keine Klebstoffe eingesetzt werden können oder sollen, erreichen die bekannten Verfahren oft nicht ausreichende dauerhafte Haftungen, und es kann insbesondere bei mechanischer Belastungen zu Delaminierung im Schichtaufbau kommen.

Basierend auf diesem Hintergrund ist es daher eine Aufgabe der vorliegenden Erfindung, einen Verbundstoff, insbesondere ein Laminat, mit einer mechanisch stabilen Verbindung der Kunststofflagen zueinander zur Verfügung zu stellen, wobei auf Klebstoffe verzichtet werden kann, und wodurch eine bessere Haftung zwischen den laminierten Lagen erzielt werden kann.

Diese Aufgabe wird durch ein Verbundstoff mit den Merkmalen des Anspruchs 1 und ein Herstellungsverfahren mit den Merkmalen des Anspruchs 9 gelöst. Vorteilhafte Ausgestaltungen sind in den entsprechenden abhängigen Ansprüchen und der folgenden Beschreibung angegeben.

Gemäß Anspruch 1 wird ein Verbundstoff, insbesondere ein Laminat, zur Verfügung gestellt. Der Verbundstoff umfasst mindestens eine erste polymeren Materiallage, und eine zweite polymeren Materiallage.

Erfindungsgemäß ist dabei insbesondere vorgesehen, dass
- die erste polymere Materiallage auf einer ersten Seite eine oder mehrere Aussparungen aufweist,
- die zweite polymere Materiallage auf einer ersten Seite eine oder mehrere Ausstülpungen aufweist, wobei die eine oder die mehreren Ausstülpungen einen ersten Bereich aufweist oder aufweisen, der sich von der Oberfläche der zweiten polymeren Materiallage erstreckt, und einen zweiten Bereich, der sich vom ersten Bereich erstreckt, wobei der zweite Bereich einen größeren Durchmesser als der ersten Bereich aufweist, und
- die mindestens eine oder mehreren Ausstülpungen formschlüssig in die eine oder mehreren Aussparungen eingreift oder eingreifen.

Insbesondere sind die oben genannten Ausstülpungen durch das formschlüssige Eingreifen in den entsprechenden Aussparungen fest verankert und wirken daher wie Nieten, so dass die beiden Materiallagen gegen Zug- und Scherkräfte stabil verbunden ("vernietet") sind.

Vorzugsweise umfasst mindestens die zweite polymere Materiallage ein thermoplastisches Material bzw. Polymer oder besteht im Wesentlichen daraus. Mit einer solcherart ausgestalteten zweiten polymeren Materiallage können mit Vorteil die oben beschrieben Ausstülpungen gebildet werden, in dem, beispielsweise, die zweite polymere Materiallage erwärmt und mit der ersten polymeren Materiallage zusammen gepresst wird. Dabei kann ein Teil des erwärmten thermoplastischen Materials der zweiten polymeren Materiallage in die eine oder mehrere Aussparung gepresst werden und somit eine feste Verbindung nach dem Aushärten erzeugt werden. Ebenfalls kann die erste polymere Materiallage ein thermoplastisches Material umfassen oder im Wesentlichen daraus bestehen, welches dann vorzugsweise durch eine höhere Erweichungs- oder Schmelztemperatur als jenes der zweiten polymeren Materiallage charakterisiert ist.

Gemäß einer Ausführungsform des erfindungsgemäßen Verbundstoffes ist vorgesehen, dass die erste polymere Materiallage oder die zweite polymere Materiallage auf einer der ersten Seite gegenüberliegenden zweiten Seite eine oder mehrere Aussparungen aufweist.

Im Zuge dessen umfasst das erfindungsgemäße Laminat gemäß einer Ausführungsform eine dritte polymere Materiallage mit einer oder mehreren Ausstülpungen, wobei die eine oder die mehreren Ausstülpungen einen ersten Bereich aufweist oder aufweisen, der sich von der Oberfläche der dritten polymeren Materiallage erstreckt, und einen zweiten Bereich, der sich vom ersten Bereich erstreckt, wobei der zweite Bereich einen größeren Durchmesser als der ersten Bereich aufweist, und die eine oder die mehreren Ausstülpungen der dritten polymeren Materiallage in die eine oder die mehreren Aussparungen auf der zweiten Seite der ersten polymeren Materiallage oder der zweiten polymeren Materiallage formschlüssig eingreift oder eingreifen.

Vorzugsweise umfasst in dieser Ausführungsform die dritte polymere Materiallage ein thermoplastisches Material oder besteht im Wesentlichen daraus. Im Falle das die erste oder zweite polymere Materiallage ebenfalls ein thermoplastisches Material umfasst oder im Wesentlichen daraus besteht, weist das thermoplastische Material der dritten polymeren Materiallage vorzugsweise eine niedriger Erweichungs- oder Schmelztemperatur als jenes der ersten oder zweiten polymeren Materiallage auf.

Gemäß einer alternativen Ausführungsform des erfindungsgemäßen Verbundstoffes ist vorgesehen, dass die erste polymere Materiallage oder die zweite polymere Materiallage auf einer der ersten Seite gegenüberliegenden zweiten Seite eine oder mehrere Ausstülpungen aufweist, wobei die eine oder die mehreren Ausstülpungen einen ersten Bereich aufweist oder aufweisen, der sich von Oberfläche der ersten polymeren Materiallage oder der zweiten polymeren Materiallage erstreckt, und einen zweiten Bereich, der sich vom ersten Bereich erstreckt, und der zweite Bereich einen größeren Durchmesser als der ersten Bereich aufweist.

Im Zuge dessen umfasst der erfindungsgemäße Verbundstoff gemäß einer Ausführungsform eine dritte polymere Materiallage mit einer oder mehreren Aussparungen, wobei die eine oder die mehreren Ausstülpungen auf der zweiten Seite der ersten polymeren Materiallage oder der zweiten polymeren Materiallage in die eine oder mehreren Aussparungen der dritten polymeren Materiallage formschlüssig eingreift oder eingreifen.

Im Falle dass die dritte polymere Materiallage ein thermoplastisches Material umfasst oder im Wesentlichen daraus, weist in dieser Ausführungsform das thermoplastische Material der dritten polymeren Materiallage vorzugsweise eine höhere Erweichungs- oder Schmelztemperatur als jenes der ersten oder zweiten polymeren Materiallage auf.

Gemäß einer weiteren Ausführungsform des erfindungsgemäßen Verbundstoffes ist vorgesehen, dass die eine oder mehreren Aussparungen in der ersten, zweiten und/oder dritten polymeren Materiallage einen ersten Bereich aufweist oder aufweisen, der sich von der Oberfläche ins Innere der jeweiligen polymeren Materiallage erstreckt, und einen zweiten Bereich, der sich vom ersten Bereich weiter in Innere der jeweiligen polymeren Materiallage erstreckt, wobei der zweite Bereich einen größeren Durchmesser als der erste Bereich aufweist.

Gemäß einer zur obigen Ausführungsform alternativen Ausführungsform des erfindungsgemäßen Verbundstoffes ist vorgesehen, dass zwischen der ersten und zweiten polymeren Materiallage, und/oder zwischen der ersten und dritten polymeren Materiallage und/oder der zweiten und dritten polymeren Materiallage eine weitere Materiallage, vorzugsweise eine nicht-polymere, insbesondere metallische, Materiallage, mit einem oder mehreren Durchgangslöcher angeordnet ist.

Hierbei weist insbesondere das oder weisen die mehreren Durchgangslöcher einen Durchmesser auf, welcher kleiner als der maximale Durchmesser der einen oder mehreren Aussparungen in der ersten, zweiten oder dritten polymeren Materiallage sind. Des Weiteren ist das Durchgangsloch oder sind die mehreren Durchgangslöcher zu der oder den mehreren Aussparungen in der ersten, zweiten oder dritten polymeren Materiallage ausgerichtet. Weiterhin ist die weitere Materiallage bei der Erweichungstemperatur oder Schmelztemperatur der ersten polymeren Materiallage, der zweiten polymeren Materiallage und/oder der dritten polymeren Materiallage formstabil. Die oben genannte weitere Materiallage dient hierbei insbesondere als Widerlager oder Halteeinrichtung für die oder die mehreren Ausstülpung.

Desweitern ist insbesondere vorgesehen, dass sich ein Teil des polymeren Materials der ersten, der zweiten oder dritten polymeren Materiallage als die eine oder mehrere Ausstülpung durch das oder die Durchgangslöcher der nicht-polymeren Materiallage erstreckt und in die eine oder mehreren Aussparung in der ersten, zweiten oder dritten polymeren Materiallage formschlüssig eingreift.

Vorzugsweise ist die weitere Materiallage eine metallische Materiallage, die beispielsweise als Leiterzug auf einer vorher beschriebenen polymeren Materiallagen angeordnet ist. Insbesondere kann die metallische Materiallage als Heizelement ausgebildet sein, welches eine der vorherigen Materiallagen im Bereich der einen oder mehreren Aussparungen erwärmen kann.

Gemäß einer weiteren Ausführungsform des erfindungsgemäßen Verbundstoffs ist vorgesehen, dass die oder die mehreren Ausstülpungen der ersten, zweiten und/oder dritten polymeren Materiallage eine nietförmige Gestalt aufweist oder aufweisen.

Gemäß einer weiteren Ausführungsform ist das erfindungsgemäßen Verbundstoff als mehrlagige Leiterplatte ausgebildet ist oder von einer mehrlagigen Leiterplatte umfasst wird.

Gemäß einer weiteren Ausführungsform des erfindungsgemäßen Verbundstoffs ist vorgesehen, dass die erste polymere Materiallage und/oder die zweite polymere Materiallage und/oder die dritte polymere Materiallage ein Flüssigkristall-Polymer, ein Polyimid, ein Polyarlyetherketon, insbesondere PEEK (Polyetheretherketon), oder ein thermoplastischen Polyurethan umfasst oder im Wesentlichen daraus besteht.

Der Begriff "Flüssigkristallpolymer" wird im Sinne der vorliegenden Erfindung im dem Fachmann bekannten und geläufigen Sinne verwendet. Ein "Flüssigkristallpolymer" bezeichnet insbesondere ein aromatisches Polymer, welches in der Schmelze oder in Lösung hochgeordnete bzw. kristalline Bereiche aufweist. Nicht-beschränkende Beispiele umfassen aromatische Polyamide wie Aramid (Kevlar) und aromatische Polyester der Hydroxybenzoesäure, wie etwa ein Polykondensat aus 4-Hydroxybenzoesäure und 6-Hydroxynaphthalen-2-carbonsäure (Vectran).

Als Polyaryletherketon im Sinne der vorliegenden Erfindung wird insbesondere ein thermoplastischer Kunststoff mit einer Aryl-O-Aryl Untereinheit bezeichnet. Nicht beschränkende Beispiele für Polyarlyetherketone umfassen Polyetherketon (PEK), Polyetheretherketon (PEEK) und Polyetherketonketon (PEKK).

Gemäß einer weiteren Ausführungsform des erfindungsgemäßen Verbundstoffs ist vorgesehen, dass die eine oder die mehreren Aussparungen in der ersten, zweiten oder dritten polymeren Materiallage einen Durchmesser im Bereich von 5 µm bis 50 µm und/oder eine Tiefe im Bereich von 5 µm bis 20 µm aufweist oder aufweisen.

Gemäß einer weiteren Ausführungsform des erfindungsgemäßen Verbundstoffs ist vorgesehen, dass die eine oder die mehreren Ausstülpungen der ersten, zweiten oder dritten polymeren Materiallage einen Durchmesser im Bereich von 5 µm bis 50µm und/oder eine Höhe im Bereich von 5 µm bis 20 µm aufweist oder aufweisen.

Gemäß Anspruch 9 wird ein Verfahren zur Herstellung eines Verbundstoffs zur Verfügung gestellt, insbesondere eines Verbundstoffes gemäß Anspruch 1 oder einer Ausführungsform davon. Das Verfahren umfasst die Schritte:
- Einbringen einer oder mehrerer Aussparungen in eine Oberfläche auf einer ersten Seite einer ersten polymeren Materiallage,
- Einbringen eines Teils eines polymeren Materials einer zweiten polymeren Materiallage in die eine oder mehreren Aussparungen in der ersten polymeren Materiallage.

Insbesondere wird oder werden dabei eine oder mehrere Ausstülpungen auf der zweiten polymeren Materiallage gebildet, die formschlüssig in die eine oder mehreren Aussparungen formschlüssig eingreift oder eingreifen, wobei die eine oder mehreren Ausstülpungen einen ersten Bereich aufweist oder aufweisen, der sich von der Oberfläche der zweiten polymeren Materiallage erstreckt, und einen zweiten Bereich, der sich vom ersten Bereich erstreckt, und der zweite Bereich einen größeren Durchmesser als der erste Bereich aufweist.

Durch das erfindungsgemäße Verfahren werden daher also insbesondere kleinste Kavitäten in die Oberfläche eines der zu verbindenden Kunststoffe eingebracht. Der zweite Kunststoff wird dann insbesondere auf den ersten Kunststoff aufgeschmolzen, so dass der zweite Kunststoff die Kavitäten in der Oberfläche des ersten Kunststoffs eingebrachten Strukturen exakt ausfüllt. Die Kavitäten sind dabei vorzugsweise wie "inverse Nieten" geformt, so dass die Oberflächen der beiden Kunststoffe stabil gegen Zug und Scherkräfte verbunden ("vernietet") sind.

Alternativ dazu können auch eine oder mehrere Ausstülpungen auf der ersten Seite der ersten polymeren Materiallage erzeugt werden, und die eine oder mehreren Ausstülpungen der ersten polymeren Materiallage in die Oberfläche der zweiten polymeren Materiallage eingepresst werden, insbesondere unter Druck und Temperatur. Dadurch entsteht oder entstehen eine oder mehrere Aussparungen in der zweiten polymer Materiallage, in welche die eine oder mehreren Ausstülpungen der ersten polymeren Materiallage formschlüssig eingreift oder eingreifen. Die eine oder mehreren Ausstülpungen der ersten polymeren Materiallage weist oder weisen dabei einen ersten Bereich auf, der sich von der Oberfläche der ersten polymeren Materiallage erstreckt, und einen zweiten Bereich, der sich vom ersten Bereich erstreckt, wobei der zweite Bereich einen größeren Durchmesser als der erste Bereich aufweist.

Gemäß einer Ausführungsform umfasst das erfindungsgemäße Herstellungsverfahren weiterhin die Schritte:
- Einbringen einer oder mehreren Aussparungen in eine Oberfläche einer dritten polymeren Materiallage, und
- Einbringen eines Teils des polymeren Materials der ersten oder zweiten polymeren Materiallage in die eine oder mehreren Aussparungen in der dritten polymeren Materiallage.

Dabei wird oder werden auch in diesen Schritten insbesondere eine oder mehrere Ausstülpungen auf der ersten oder zweiten polymeren Materiallage gebildet, die formschlüssig in die eine oder mehreren Aussparungen in der Oberfläche der dritten polymeren Materiallageformschlüssig eingreift oder eingreifen, wobei die eine oder mehreren Ausstülpungen auf der ersten oder zweiten polymeren Materiallage einen ersten Bereich aufweist oder aufweisen, der sich von der Oberfläche der ersten oder zweiten polymeren Materiallage erstreckt, und einen zweiten Bereich, der sich vom ersten Bereich erstreckt, und der zweite Bereich einen größeren Durchmesser als der erste Bereich aufweist.

Mit dieser Ausführungsform kann ein dreilagiger Verbundstoff erhalten werden, in welchem die erste polymere Materiallage von der zweiten und dritten polymeren Materiallage umschlossen wird oder die zweite Materiallage von der ersten und dritten Materiallage, wobei die jeweilige mittlere Materiallage Ausstülpungen ("Nieten") in der dritten polymeren Materiallage bildet.

Gemäß einer alternativen Ausführungsform umfasst das erfindungsgemäße Herstellungsverfahren weiterhin die Schritte:
- Einbringen einer oder mehrere Aussparungen in eine Oberfläche auf einer der ersten Seite gegenüberliegenden Seite der ersten polymeren Materiallage, und
- Einbringen eines Teils des polymeren Materials einer dritten polymeren Materiallage in die eine oder mehreren Aussparungen in der ersten polymeren Materiallage.

Dabei wird oder werden insbesondere eine oder mehrere Ausstülpungen auf dritten polymeren Materiallage gebildet, die formschlüssig in die eine oder mehreren Aussparungen in die Oberfläche auf der der ersten Seite gegenüberliegenden Seite der ersten polymeren Materiallage eingreift oder eingreifen, wobei die eine oder mehreren Ausstülpungen auf der dritten polymeren Materiallage einen ersten Bereich aufweist oder aufweisen, der sich von der Oberfläche der dritten polymeren Materiallage erstreckt, und einen zweiten Bereich, der sich vom ersten Bereich erstreckt, und der zweite Bereich einen größeren Durchmesser als der erste Bereich aufweist.

Mit dieser Ausführungsform kann ein dreilagiger Verbundstoff erhalten werden, in welchem die erste polymere Materiallage von der zweiten und dritten polymeren Materiallage umschlossen wird, und die dritte polymere Materiallage Ausstülpungen ("Nieten") in der ersten polymeren Materiallage bildet.

Gemäß einer alternativen Ausführungsform umfasst das erfindungsgemäße Herstellungsverfahren weiterhin die Schritte:
- Einbringen einer oder mehrere Aussparungen in eine Oberfläche auf einer der ersten Seite gegenüberliegenden Seite der zweiten polymeren Materiallage, und
- Einbringen eines Teils des polymeren Materials einer dritten polymeren Materiallage in die eine oder mehreren Aussparungen in der zweiten polymeren Materiallage.

Hierbei wird oder werden insbesondere eine oder mehrere Ausstülpungen auf dritten polymeren Materiallage gebildet, die formschlüssig in die eine oder mehreren Aussparungen in die Oberfläche auf der der ersten Seite gegenüberliegenden Seite der zweiten polymeren Materiallage eingreift oder eingreifen, wobei die eine oder mehreren Ausstülpungen auf der dritten polymeren Materiallage einen ersten Bereich aufweist oder aufweisen, der sich von der Oberfläche der dritten polymeren Materiallage erstreckt, und einen zweiten Bereich, der sich vom ersten Bereich erstreckt, und der zweite Bereich einen größeren Durchmesser als der erste Bereich aufweist.

Mit dieser Ausführungsform kann ein dreilagiger Verbundstoff erhalten werden, in welchem die zweite polymere Materiallage von der ersten und dritten polymeren Materiallage umschlossen wird, und die dritte polymere Materiallage Ausstülpungen ("Nieten") in der zweiten polymeren Materiallage bildet.

Alternativ zu den vorher beschriebenen Ausführungsformen können natürliche auch eine oder mehrere Ausstülpungen auf der zweiten Seite der ersten oder zweiten polymeren Materiallage oder auf der Oberfläche der dritten polymeren Materiallage erzeugt werden, und die eine oder mehreren Ausstülpungen der ersten, zweiten oder dritten polymeren Materiallage in die Oberfläche der ersten, zweiten oder dritten polymeren Materiallage eingepresst werden, insbesondere unter Druck und Temperatur, wobei eine oder mehrere Aussparungen in der jeweils anderen polymeren Materiallage erzeugte werden, in welche die vorher beschriebenen eine oder mehrere Ausstülpungen formschlüssig eingreift oder eingreifen.

Gemäß einer Ausführungsform des erfindungsgemäßen Herstellungsverfahrens umfasst das Einbringen eines Teils eines polymeren Materials einer der vorgenannten polymeren Materiallagen in eine oder mehrere Aussparung einer anderen der vorgenannten polymeren Materiallagen ein Zusammenpressen der eine und der anderen Materiallage, wobei
ein Teil des polymeren Materials der einen Materiallage in die eine oder mehreren Aussparungen in der anderen Materiallage gepresst wird. Vorzugsweise wird die erste, zweite und/oder dritte Materiallage vor oder während des Zusammenpressens erwärmt, vorzugsweise mindestens auf die Erweichungstemperatur oder die Schmelztemperatur der jeweiligen polymeren Materiallage, deren polymeres Material in die eine oder die mehreren Aussparungen gepresst wird.

Gemäß einer alternativen Ausführungsform ist vorgesehen, dass die zweite und/oder dritte polymere Materiallage auf die erste oder zweite polymere Materiallage aufgebracht wird, insbesondere in Form eines fließfähigen Vorläufers, so dass die eine oder mehreren Aussparungen von dem fließfähigen Vorläufer gefüllt werden, wobei insbesondere anschließend der fließfähige Vorläufer zur zweiten oder dritten polymeren Materiallage ausgehärtet wird. Ein fließfähiger Vorläufer kann z.B. eine Mischung aus mehreren Komponenten von Monomeren oder Oligomeren sein, die nach dem Aufbringen auf die erste oder zweite polymere Materiallage vernetzt, ausgehärtet oder kondensiert werden, Nicht beschränkende Beispiele für geeignete Monomere oder Oligomere umfassen Alkylhalogensilane (als Vorläufer für Poly(organo)siloxane) oder organische Verbindungen mit mindestens einer Epoxidgruppe (als Vorläufer für Epoxidharze).

Gemäß einer weiteren Ausführungsform des erfindungsgemäßen Herstellungsverfahrens ist vorgesehen, dass die eingebrachte eine oder mehreren Aussparungen der ersten, zweiten oder dritten polymeren Materiallage einen ersten Bereich aufweist oder aufweisen, der sich von der Oberfläche ins Innere der jeweiligen polymeren Materiallage erstreckt, und einem zweiten Bereich, der sich vom ersten Bereich weiter in Innere der jeweiligen polymeren Materiallage erstreckt, wobei der zweite Bereich einen größeren Durchmesser als der erste Bereich aufweist.

Mit solcherart eingebrachten Aussparungen können beim Zusammenpressen von jeweils zwei polymeren Materiallagen mit Vorteil auf der jeweils anderen Materiallage Ausstülpungen gebildete werden, die einen ersten Bereich aufweist oder aufweisen, der sich von der Oberfläche der anderen polymeren Materiallage erstreckt, und einen zweiten Bereich, der sich vom ersten Bereich erstreckt, wobei der zweite Bereich einen größeren Durchmesser als der erste Bereich aufweist.

Gemäß einer alternativen Ausführungsform des erfindungsgemäßen Herstellungsverfahrens ist vorgesehen, dass nach dem Einbringen der einen oder mehreren Aussparungen in die erste, zweite und/oder dritte polymere Materiallage eine weitere Materiallage, vorzugsweise eine nicht-polymere, insbesondere metallische, Materiallage, mit einem oder mehreren Durchgangslöcher zwischen der ersten und zweiten, zwischen zweiten und dritten und/oder zwischen der ersten und dritten polymeren Materiallage angeordnet wird, wobei
- das eine oder die mehreren Durchgangslöcher einen Durchmesser aufweist oder aufweisen, der kleiner als der maximale Durchmesser der einen oder mehreren Aussparungen in der ersten, zweiten und/oder dritten polymere Materiallage ist,
- das eine oder die mehreren Durchgangslöcher zu der einen oder mehreren Aussparungen ausgerichtet wird oder werden, und
- die weitere Materiallage bei der Erweichungstemperatur oder Schmelztemperatur der ersten, zweiten und/oder dritten polymeren Materiallage formstabil ist.

Mit dieser Ausführungsform können ebenfalls mit Vorteil beim Zusammenpressen zweier thermoplastischer Materiallagen Ausstülpungen gebildet werden, die einen ersten Bereich oder aufweisen, der sich von der Oberfläche der jeweiligen polymeren Materiallage erstreckt, und einen zweiten Bereich, der sich vom ersten Bereich erstreckt, wobei der zweite Bereich einen größeren Durchmesser als der erste Bereich aufweist. Insbesondere ist dabei vorgesehen, dass das polymere Material der ersten, zweiten und oder dritten polymeren Materiallage durch das oder die Durchlöcher gepresst wird und sich anschließend in die eine oder die mehreren Aussparungen ergießt.

Gemäß einer weiteren Ausführungsform des erfindungsgemäßen Herstellungsverfahrens ist vorgesehen, dass eine oder mehreren Aussparungen in die erste, zweite oder dritte polymere Materiallage durch Ätzen oder Einpressen eingebracht wird oder werden. In einer Ausführungsform wird das Einpressen mit einer Pressform durchgeführt, die eine oder mehrere Ausstülpungen aufweist, wobei die eine oder mehreren Ausstülpungen jeweils einen ersten Bereich aufweist, der sich von der Oberfläche der Pressform erstreckt, und einen zweiten Bereich, der sich vom ersten Bereich erstreckt, und der zweite Bereich einen größeren Durchmesser als der ersten Bereich aufweist. In einer Alternativen Ausführungsform weist die Pressform eine oder mehrere Aussparungen auf, mit jeweils einem ersten Bereich, der sich von der Oberfläche der Pressform ins Innere der Pressform erstreckt, und einem zweiten Bereich, der sich vom ersten Bereich weiter in Innere der Pressform erstreckt, wobei der zweite Bereich einen größeren Durchmesser als der erste Bereich aufweist, womit mit Vorteil eine oder mehrere Ausstülpungen erzeugt werden können.

Vorzugsweise wird die Pressform nach dem Einpressen stofflich aufgelöst, vorzugsweise durch Ätzen, um auf die Weise eine oder mehrere Aussparungen oder Ausstülpungen zu erhalten, die einen ersten Bereich aufweisen, der sich von der Oberfläche ins Innere der jeweiligen polymeren Materiallage erstreckt, und einen zweiten Bereich, der sich vom ersten Bereich weiter in Innere der jeweiligen polymeren Materiallage erstreckt, wobei der zweite Bereich einen größeren Durchmesser als der erste Bereich aufweist.

Die Verwendung von photolithographisch erzeugten, mikroskopisch kleinen Kavitäten bzw. Aussparungen, also durch Ätzen, zur Verbesserung der Haftung hat gegenüber dem Stand der Technik mehrere Vorteile. Sie ist unabhängig von den chemischen Eigenschaften der beteiligten Materialien, was insbesondere bei der Verwendung von inerten Kunststoffen von Vorteil ist. Durch die freiere Materialwahl entstehen Vorteile für Biostabilität und Biokompatibilität bei Anwendungen in Implantaten. Die Kavitäten bzw. Aussparungen können genau dort in die Oberfläche der zu verbindenden Polymerschichten eingebracht werden, wo sie benötigt werden.

Gemäß einer weiteren Ausführungsform des erfindungsgemäßen Herstellungsverfahrens ist vorgesehen, dass die erste, zweite und/oder dritte polymere Materiallage ein Flüssigkristall-Polymer, ein Polyimid, ein Polyetherketon, insbesondere PEEK, oder ein thermoplastisches Polyurethan umfasst oder im Wesentlichen daraus besteht.

Weitere Merkmale und Vorteile der Erfindung werden nachfolgend anhand der Figurenbeschreibung von Ausführungsbeispielen erläutert. Es zeigen:
- Fig. 1: (a) ein Querschnitt durch eine Polymerfolie 1 mit eingebrachten Mikro-Kavitäten 2;
(b) die Laminierung einer zweiten Polymerfolie 4 über die erste Polymerfolie 1;
(c) einen Querschnitt durch das Interface der Oberfläche zwischen den beiden Polymerfolien 1, 4;
- Fig. 2: einen Querschnitt durch das Interface der Oberflächen von zwei miteinander über die Polymerschicht 4 verbunden Leiterplatten 1,7;
- Fig. 3: die Abformung der Mikrokavitäten 2 über eine strukturierte Metallmaske 3;
- Fig. 4: eine Polymerfolie 1 mit geeignet strukturierten Ätzmaske 6 zum chemischen oder physikalischen Entfernen des Polymermaterials aus den Mikrokavitäten 2;
- Fig. 5: den Prozessablauf zur Herstellung einer Ätzmaske 6 auf der Polymerfolie 1;
- Fig. 6: eine Polymerfolie 1 mit geeignet strukturierten Ätzmaske 6 zum chemischen oder physikalischen Entfernen des Polymermaterials aus den Mikrokavitäten 2;
- Fig. 7: das Aufschmelzen eines Polymerformkörpers 4 auf einer Polymerfolie 1 mit Heizleiter 6;
- Fig. 8: das Abformen einer Polymerfolie 1 mit einer Metallfolie 3 mit Mikrokavitäten 3; und
- Fig. 9: die Verankerung einer Polymerfolie 1 mit Ausformungen auf der Oberfläche in einer zweiten Polymerfolie 4.

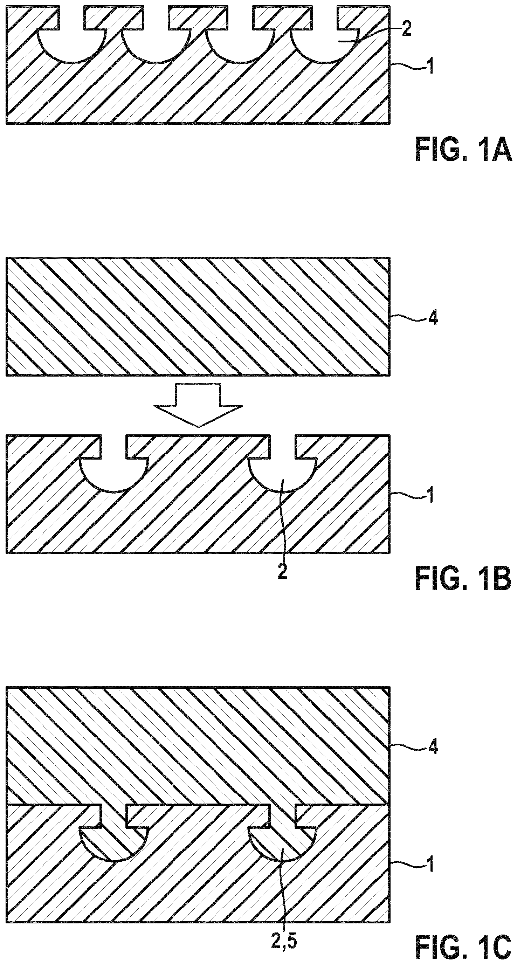

Eine Grundidee der vorliegenden Erfindung ist insbesondere die Einbringung von mikroskopisch kleinen Kavitäten (Mikrokavitäten) mit der Form einer "inversen" Niete (Aussparung) 2 in die Oberfläche von Kunststoffen 1, die mit einem anderen Kunststoff 4 stabil und dauerhaft verbunden werden sollen (Fig. 1a). Erfindungsgemäß ist weiterhin vorgesehen, die "Nieten" in die Oberfläche einzubringen (Fig. 1b, Fig. 1c).

Laminiert man also eine zweite Polymerfolie 4 mittels geeignetem Druck und erhöhter Temperatur über eine erste Polymerfolie 1 mit Mikrokavitäten 2 (Fig., 1b), so dass sich die Mikrokavitäten 2 mit dem zweiten Polymer 4 füllen, erhält man eine mechanisch stabile Verbindung der beiden Polymerschichten 1, 4, insbesondere in Form von "Nieten" 5, die von der zweiten Polymerfolie 4 gebildet werden, und formschlüssig in die Mikrokavitäten 2 der ersten Polymerfolie 1 eingreifen (Fig. 1c).

Alternativ zur Laminierung kann auch das zweite Polymermaterial 4 aus einer Mischung von Komponenten bestehen und über der ersten Polymerfolie 1 verteilt werden, so dass sich die Mikrokavitäten 2 mit der Mischung füllen und das Polymermaterial 4 anschließend geeignet ausgehärtet oder kondensiert werden kann. Insbesondere kann dafür ein fließfähiger Vorläufer der zweiten Polymerfolie 4, beispielsweise eine Lösung mit Monomeren und/oder Oligomeren (längere Polymerketten), auf die erste Polymerfolie aufgetragen werden, so dass die Lösung in die Mikrokavitäten 2 einfließt bzw. diese füllt, und Monomere bzw. Oligomere anschließend miteinander vernetzt werden, beispielsweise mittels Quervernetzer, Radikalbildner, UV-Strahlung und/oder Wärme. Das Polymermaterial kann alle polymeren Materialien umfassen, die sich aus Monomere bzw. Oligomeren bei Temperaturen aushärten bzw. kondensieren lassen, die unterhalb des Erweichungs- bzw. Schmelzpunktes der ersten Polymerfolie 1 liegen. Insbesondere geeignet sind hier Silikone und Epoxidharze.

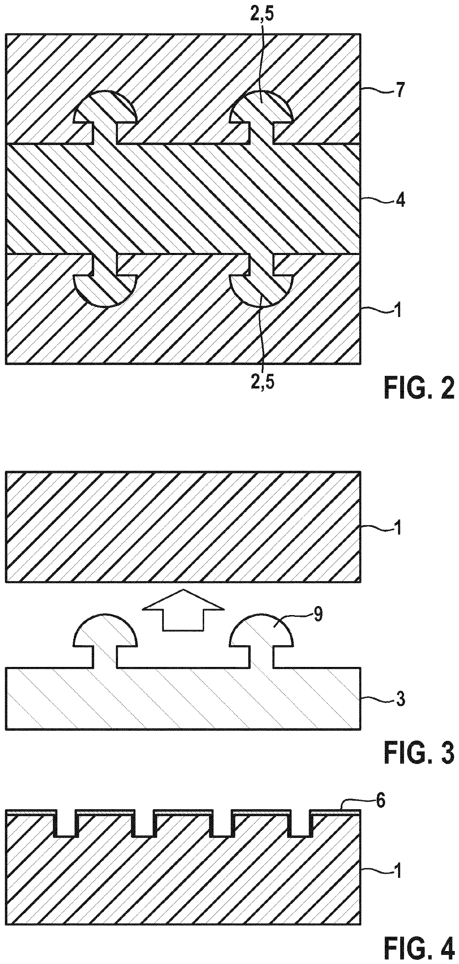

Vorzugsweise ist die Polymerfolie 1 die oberste Schicht einer Leiterplatte, die auch mehrlagig sein kann. Eine Polymerfolie 4 kann auch zwischen zwei Leiterplatten gelegt und laminiert werden, wobei dann beide Leiterplatten an der Oberseite Polymerschichten 1, 7 besitzen, die entsprechende Mikrokavitäten 2 eingebracht sind (Fig. 2). Dadurch können Leiterplatten lokal definiert miteinander stabil verbunden werden.

Die wie "inverse Nieten" ausgeformten Mikro-Kavitäten 2 werden in die Polymerfolie 1 entweder durch Abformung mit einer Metallform 3 (Fig. 3) oder durch Entfernen von Material erzeugt (Fig. 4). Das Material der Polymerfolie 1, 4, 7 kann beispielsweise mittels eines mikromechanischen Ätzverfahrens chemisch oder mit einem Plasma entfernt werden. Vorteilhafterweise bieten sowohl die Metallform 3 als auch das Ätzverfahren die Möglichkeit, dass die Mikrokavitäten 2 nur an bestimmten, durch das Design der Ätzmasken vorgegebenen Stellen in die Oberfläche eingebracht werden. Damit kann die Haftung an genau festgelegten Stellen eines Produktdesigns verbessert werden. Das stellt einen großen Vorteil gegenüber anderen Verfahren dar.

Bei der Abformung wird die Metallform 3 in die Oberfläche der Polymerfolie 1 mit geeignetem Druck und bei erhöhter Temperatur gedrückt (Fig. 3), wobei die Metallform 3 insbesondere über eine oder mehrere Ausstülpungen 9 aufweist, welche die Form der einzubringenden Mikrokavitäten 2 entsprechen. Danach wird die Metallform mit einem geeigneten Ätzmedium vollständig entfernt. Es verbleiben Mikrokavitäten 2, wie in Fig. 1a gezeigt, in der Oberfläche zurück.

In einem alternativen Verfahren werden die Mikrokavitäten 2 aus der Polymerfolie 1 mittels chemischen oder physikalischen Ätzverfahren entfernt. Dazu wird die Oberfläche mit einer geeignet strukturierten Ätzmaske 6 abgedeckt (Fig. 4). Nach dem Ätzen und Entfernen der Ätzmaske 6 verbleiben die Mikrokavitäten 2 wie in Fig. 1a 1 gezeigt im Material 1.

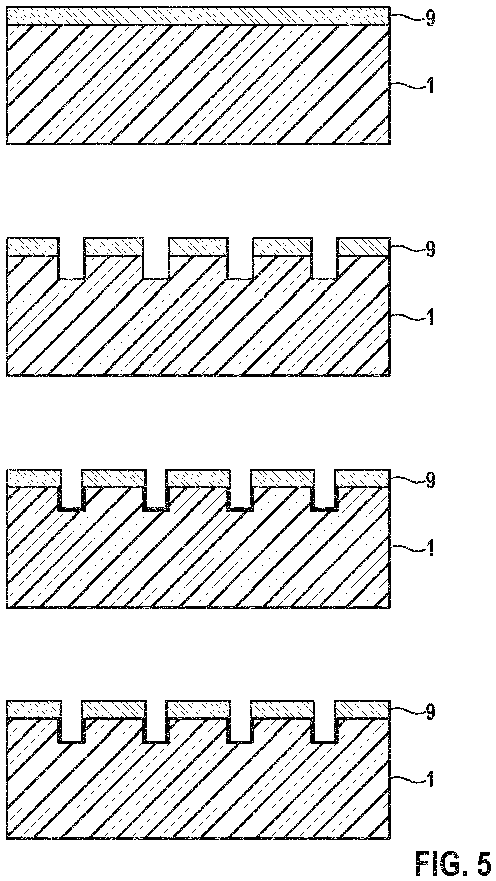

Eine solche Ätzmaske kann z.B. durch den in Fig. 5 dargestellten folgenden Prozessablauf aus einer kupferbeschichteten Polymerfolie hergestellt werden. In eine mit Kupfer kaschierte Polymerfolie werden zunächst mit einem geeigneten Laserprozess kleine Löcher durch Ablation eingebracht. Anschließend werden die entstandenen Löcher mittels eines chemischen Verfahrens mit Kupfer belegt. Danach wird wiederum mit einem Laserprozess der Boden der Löcher wieder von Kupfer befreit. Die entstandene Struktur ist geeignet um in einem folgenden Ätzprozess die Mikrokavitäten 2 in der Oberfläche der Polymerfolie 1, wie in Fig. 1a gezeigt, zu erzeugen.

Die Größenordnung der Mikrokavitäten 2 ergibt sich aus den Prozessfähigkeiten bei der Herstellung der Abformmaske bzw. der Ätzmaske. Mit heutigen Lasern für Ablation und Belichtung lassen sich Mikro-Kavitäten mit Durchmessern von ca. 2 bis 50 µm und Tiefen von ca. 2 bis 20 µm erzeugen. Die Dimensionen der Kavitäten 2 bewegen sich vorzugsweise im Bereich von ca. 5 - 50 µm für den Durchmesser und ca. 5 - 10 µm für die Tiefe.

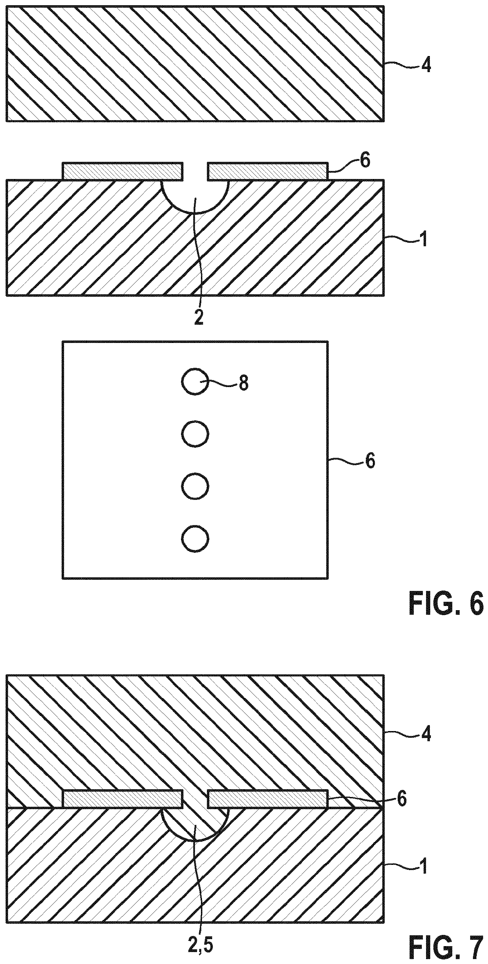

Bei einer weiteren Ausführungsform belässt man einen Teil der Ätzmaske 6 auf der Grenzfläche zwischen zwei beiden Polymermaterialien bzw. Polymerfolien 1, 4 (Fig. 6). Wenn die Ätzmaske 6 als Leiterzug ausbildet wird, kann dieser Leiterzug 6 zum lokalen Aufschmelzen des Polymers 4 verwendet werden. In diesem Fall kann das Polymer 4 in die Kavitäten 2 unter dem Heizleiter 6 fließen und nach Abkühlung eine hohe Querbelastung erreichen können. Das ist insbesondere dann von Interesse, wenn es sich bei dem Polymermaterial 4 um eine Struktur handelt, die nur im Bereich des Heizleiters ausgeformt ist und daher nur eine geringe Oberfläche für die Erzielung einer guten Haftung zur Verfügung steht (Fig. 7).

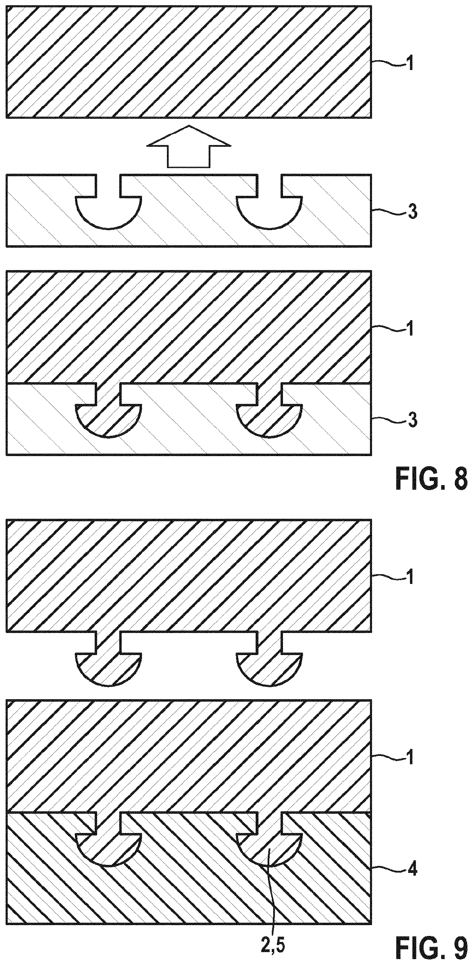

Bei einer weiteren Ausführungsform sind Mikrokavitäten 2 in einer zum Abformen verwendeten Metallfolie 3 vorhanden (Fig. 8). In diesem Fall erhält man Ausformungen bzw. Ausstülpungen 5 auf der Oberfläche der Polymerfolie 1, die zur Verankerung in einer zweiten Polymerfolie 4 verwendet werden können (Fig. 9). Diese Form wird insbesondere dann vorteilhaft sein, wenn die Polymerfolie 4 einen niedrigeren Schmelzpunkt bzw. Erweichungspunkt als die Polymerfolie 1 aufweist.

## Patentansprüche

1. Verbundstoff, insbesondere, ein Laminat, umfassend
- eine erste polymere Materiallage (1), und
- eine zweite polymere Materiallage (4),
**dadurch gekennzeichnet, dass**
- die erste polymere Materiallage (1) auf einer ersten Seite eine oder mehrere Aussparungen (2) aufweist,
- die zweite polymere Materiallage (4) auf einer ersten Seite eine oder mehrere Ausstülpungen (5) aufweist, wobei die eine oder die mehreren Ausstülpungen (5) einen ersten Bereich aufweist oder aufweisen, der sich von der Oberfläche der zweiten polymeren Materiallage (4) erstreckt, und einen zweiten Bereich, der sich vom ersten Bereich erstreckt, und der zweite Bereich einen größeren Durchmesser als der ersten Bereich aufweist, und
- die mindestens eine oder mehreren Ausstülpungen (5) formschlüssig in die eine oder mehreren Aussparungen (2) eingreift oder eingreifen.

2. Verbundstoff nach Anspruch 1, **dadurch gekennzeichnet, dass** die erste polymere Materiallage (1) oder die zweite polymere Materiallage (4) auf einer der ersten Seite gegenüberliegenden zweiten Seite
- eine oder mehrere Aussparungen (2) aufweist, oder
- eine oder mehrere Ausstülpungen (5), wobei die eine oder mehreren Ausstülpungen (5) einen ersten Bereich aufweist oder aufweisen, der sich von Oberfläche der ersten polymeren Materiallage (1) oder der zweiten polymeren Materiallage (4) erstreckt, und einen zweiten Bereich, der sich vom ersten Bereich erstreckt, und der zweite Bereich einen größeren Durchmesser als der ersten Bereich aufweist.

3. Verbundstoff nach Anspruch 2, weiterhin umfassend eine dritte polymere Materiallage (7) mit
- einer oder mehreren Aussparungen (2), wobei
die eine oder mehreren Ausstülpungen (2) auf der zweiten Seite der ersten polymeren Materiallage (1) oder der zweiten polymeren Materiallage (4) in die eine oder mehreren Aussparungen (2) der dritten polymeren Materiallage (7) formschlüssig eingreift oder eingreifen, oder
- eine oder mehrere Ausstülpungen (5), wobei die eine oder mehreren Ausstülpungen (5) einen ersten Bereich aufweist oder aufweisen, der sich von der Oberfläche der dritten polymeren Materiallage (7) erstreckt, und einen zweiten Bereich, der sich vom ersten Bereich erstreckt, und der zweite Bereich einen größeren Durchmesser als der ersten Bereich aufweist, und
die eine oder mehreren Ausstülpungen (5) der dritten polymeren Materiallage (7) in die eine oder mehreren Aussparungen (2) auf der zweiten Seite der ersten polymeren Materiallage (1) oder der zweiten polymeren Materiallage (4) formschlüssig eingreift oder eingreifen.

4. Verbundstoff nach einem vorherigen Ansprüche, **dadurch gekennzeichnet, dass** die eine Aussparung oder mehreren Aussparungen (2) in der ersten (1), zweiten (4) und/oder dritten polymeren Materiallage (7) einen ersten Bereich aufweist oder aufweisen, der sich von der Oberfläche ins Innere der jeweiligen polymeren Materiallage (1, 4, 7) erstreckt, und einen zweiten Bereich, der sich vom ersten Bereich weiter in Innere der jeweiligen polymeren Materiallage (1, 4, 7) erstreckt, wobei der zweite Bereich einen größeren Durchmesser als der erste Bereich aufweist.

5. Verbundstoff nach einem der Ansprüche 1 bis 3, **dadurch gekennzeichnet, dass** zwischen der ersten (1) und zweiten polymeren Materiallage (4), und/oder zwischen der ersten (1) und dritten polymeren Materiallage (7) und/oder der zweiten (4) und dritten polymeren Materiallage (7) eine weiter Materiallage (6), vorzugsweise eine nicht polymer, insbesondere metallische, Materiallage, mit einem oder mehreren Durchgangslöcher (8) angeordnet ist, wobei
- das eine oder die mehreren Durchgangslöcher (8) einen Durchmesser aufweist oder aufweisen, der kleiner als der maximale Durchmesser der einen oder der mehreren Aussparungen (2) in der der ersten (1), zweiten (4), und/oder der dritten polymeren Materiallage (7) sind,
- das eine oder die mehreren Durchgangslöcher (8) zu der einen oder den mehreren Aussparungen (2) ausgerichtet ist oder sind, und
- die weitere Materiallage (6) bei der Erweichungstemperatur oder Schmelztemperatur der ersten polymeren Materiallage (1), der zweiten polymeren Materiallage (4) und/oder der dritten polymeren Materiallage formstabil (7) ist.

6. Verbundstoff nach einem der vorherigen Ansprüche, **dadurch gekennzeichnet, dass** der Verbundstoff als mehrlagige Leiterplatte ausgebildet ist oder von einer mehrlagigen Leiterplatte umfasst wird.

7. Verbundstoff nach einem der vorherigen Ansprüche, **dadurch gekennzeichnet, dass** die erste die erste polymere Materiallage (1) und/oder die zweite polymere Materiallage (4) und/oder die dritte polymere Materiallage (7) ein Flüssigkristall-Polymer, ein Polyimid, ein Polyetherketon, insbesondere PEEK, oder ein thermoplastisches Polyurethan umfasst oder im Wesentlichen daraus besteht.

8. Verbundstoff nach einem der vorherigen Ansprüche, **dadurch gekennzeichnet, dass**
- die eine oder die mehreren Aussparungen in der ersten (1), zweiten (4) oder dritten polymeren Materiallage (7) einen Durchmesser im Bereich von 5 µm bis 50µm und/oder eine Tiefe im Bereich von 5 µm bis 20 µm, und/oder
- die eine oder die mehreren Ausstülpungen (5) der ersten (1), zweiten (4) oder dritten polymeren Materiallage (7) einen Durchmesser im Bereich von 5 µm bis 50 µm und/oder eine Höhe im Bereich von 5 µm bis 20 µm
aufweist oder aufweisen.

9. Verfahren zur Herstellung eines Verbundstoffes, insbesondere eines Verbundstoffes nach einem der Ansprüche 1 bis 8, umfassend die Schritte:
- Einbringen einer oder mehrerer Aussparungen (2) in eine Oberfläche auf einer ersten Seite einer ersten polymere Materiallage (1), und
- Einbringen eines Teils eines polymeren Materials einer zweiten polymeren Materiallage (4) in die eine oder mehreren Aussparungen (2) in der ersten polymeren Materiallage (1), wobei insbesondere
• eine oder mehrere Ausstülpungen (5) auf der zweiten polymeren Materiallage (4) gebildet wird oder werden, die formschlüssig in die eine oder mehreren Aussparungen (2) der ersten polymeren Materiallage (1) formschlüssig eingreift oder eingreifen, und
• die eine oder mehreren Ausstülpungen (5) einen ersten Bereich aufweist oder aufweisen, der sich von der Oberfläche der zweiten polymeren Materiallage (4) erstreckt, und einen zweiten Bereich, der sich vom ersten Bereich erstreckt, wobei der zweite Bereich einen größeren Durchmesser als der erste Bereich aufweist.

10. Verfahren nach Anspruch 9, weiterhin umfassend die Schritte:
- Einbringen einer oder mehreren Aussparungen (2) in eine Oberfläche auf einer der ersten Seite gegenüberliegenden zweiten Seite der ersten (1) oder zweiten polymeren Materiallage (4), oder in eine Oberfläche einer dritten polymeren Materiallage (7), und
- Einbringen eines Teils des polymeren Materials der ersten (1), zweiten (4) oder dritten polymeren Materiallage (7) in die eine oder mehreren Aussparungen (2) in der ersten (1), zweiten (4) oder dritten polymeren Materiallage (7), wobei insbesondere
• eine oder mehrere Ausstülpungen (5) auf der ersten (1), zweiten (4) oder dritten polymeren Materiallage (7) gebildet wird oder werden, die formschlüssig in die eine oder mehreren Aussparungen in der ersten (1), zweiten (4) oder dritten polymeren Materiallage (7) formschlüssig eingreift oder eingreifen, und
• die eine oder mehreren Ausstülpungen (5) auf der ersten (1), zweiten (4) oder dritten polymeren Materiallage (7) einen ersten Bereich aufweist oder aufweisen, der sich von der Oberfläche der zweiten polymeren Materiallage (4) erstreckt, und einen zweiten Bereich, der sich vom ersten Bereich erstreckt, und der zweite Bereich einen größeren Durchmesser als der erste Bereich aufweist.

11. Verfahren nach Anspruch 9 oder 10, **dadurch gekennzeichnet, dass** das Einbringen eines Teils des polymeren Materials der ersten (1), zweiten (4) oder dritten polymeren Materiallage (7) in die eine oder mehreren Aussparungen (2) ein Zusammenpressen der ersten (1), zweiten (4) und/oder dritten polymeren Materiallage (7) umfasst, wobei ein Teil des polymeren Materials der ersten (1), zweiten (4) oder dritten polymeren Materiallage (7) in die eine oder mehreren Aussparungen (2) in der ersten (1), zweiten (4) oder dritten polymeren Materiallage (7) gepresst wird, wobei insbesondere die erste (1), zweite (4) und/oder dritte polymere Materiallage (7) vor oder während dem Zusammenpressen erwärmt wird.

12. Verfahren nach einem der Ansprüche 9 bis 11, **dadurch gekennzeichnet, dass** die eingebrachte eine oder mehreren Aussparungen (2) der ersten (1), zweiten (4) oder dritten polymeren Materiallage (1) einen ersten Bereich aufweist oder aufweisen, der sich von der Oberfläche ins Innere der ersten (1), zweiten (4) oder dritten polymeren Materiallage (7) erstreckt, und einem zweiten Bereich, der sich vom ersten Bereich weiter in Innere der ersten (1), zweiten (4) oder dritten polymeren Materiallage (4) erstreckt, wobei der zweite Bereich einen größeren Durchmesser als der erste Bereich aufweist,

13. Verfahren nach Anspruch 9 bis 11, **dadurch gekennzeichnet, dass** nach dem Einbringen der einen oder mehreren Aussparungen (2) in die erste (1), zweite (4) und/oder dritte polymere Materiallage (7) eine weitere Materiallage (6), vorzugsweise eine nicht-polymere, insbesondere metallische, Materiallage, mit einem oder mehreren Durchgangslöcher (8) zwischen der ersten (1) und zweiten polymeren Materiallage (4), zwischen der zweiten (4) und dritten polymeren Materiallage (7) oder zwischen ersten (1) und dritten Materiallage (7) angeordnet wird, wobei
- das eine oder die mehreren Durchgangslöcher (8) einen Durchmesser aufweist oder aufweisen, der kleiner als der maximale Durchmesser der einen oder mehreren Aussparungen (2) in der ersten (1), zweiten (4) und/oder dritten polymere Materiallage (7),
- das eine oder die mehreren Durchgangslöcher (8) zu der einen oder mehreren Aussparungen (2) ausgerichtet wird oder werden, und
- die weitere Materiallage (8) bei der Erweichungstemperatur oder Schmelztemperatur der ersten (1), zweiten (4) oder dritten polymeren Materiallage (7) formstabil ist.

14. Verfahren nach einem der Ansprüche 9 bis 13, **dadurch gekennzeichnet, dass** eine oder mehreren Aussparungen (2) in die erste (1), zweite (4) und/oder dritte polymere Materiallage (7) durch Ätzen oder Einpressen eingebracht wird, wobei insbesondere das Einpressen mit einer Pressform (3) durchgeführt wird, die eine oder mehrere Ausstülpungen (9) aufweist, wobei die eine oder mehreren Ausstülpungen (9) einen ersten Bereich aufweist, der sich von der Oberfläche der Pressform (3) erstreckt, und einen zweiten Bereich, der sich vom ersten Bereich erstreckt, und der zweite Bereich einen größeren Durchmesser als der ersten Bereich aufweist.

15. Verfahren nach einem der Ansprüche 9 bis 14, **dadurch kennzeichnet, dass** das die erste (1), zweite (4) und/oder dritte polymere Materiallage (7) ein Flüssigkristall-Polymer, ein Polyimid, ein Poylaryletherketon oder ein thermoplastisches Polyurethan umfasst oder im Wesentlichen daraus besteht.
